# EUROPÄISCHE PATENTSCHRIFT

(11) **EP 3 487 677 B1**
(45) Veröffentlichungstag und Bekanntmachung des Hinweises auf die Patenterteilung: **08.09.2021**
(21) Anmeldenummer: 17739616.5
(22) Anmeldetag: 20.07.2017
(51) Int. Cl.: B29C 41/00, B29C 41/04, B29C 41/18, B29C 45/00, B29C 39/00, B29C 43/00, B29K 21/00, B29K 75/00, B29B 9/12, B29C 35/08

(54) **MIKROWELLENVERSCHWEISSUNG VON ELASTOMERPULVER**
MICROWAVE WELDING OF ELASTOMER POWDER
SOUDURE PAR MICRO-ONDES DE POUDRE ELASTOMERE

(30) Priorität: 21.07.2016 EP 16180469
(43) Veröffentlichungstag der Anmeldung: 29.05.2019
(73) Patentinhaber: BASF SE, 67056 Ludwigshafen am Rhein (DE)
(72) Erfinder: PRISSOK, Frank, 49448 Lemfoerde (DE); HARMS, Michael, 49448 Lemfoerde (DE)
(74) Vertreter: BASF IP Association
(86) Internationale Anmeldenummer: PCT/EP2017/068396
(87) Internationale Veröffentlichungsnummer: WO 2018/015504

(56) Entgegenhaltungen:
- EP-A1- 0 000 920
- EP-A2- 0 174 188
- US-A1- 2004 102 599
- PROCIAK A ET AL: "Thermoplastic polyurethane foamed under microwave irradiation", POLIMERY/POLYMERS 2012 INDUSTRIAL CHEMISTRY RESEARCH INSTITUTE POL, Bd. 57, Nr. 11-12, 2012, Seiten 786-790, XP002765671,
- BASF: "Thermoplastic Polyurethane Elastomers", , 1. Mai 2012 (2012-05-01), XP002765672, Gefunden im Internet: URL:http://www.polyurethanes.basf.de/pu/so lutions/en/function/conversions:/publish/c ontent/group/Arbeitsgebiete_und_Produkte/T hermoplastische_Spezialelastomere/sortimen t/tpu_sort_en.pdf [gefunden am 2016-11-07]

## Beschreibung

Die vorliegende Erfindung betrifft ein Herstellungsverfahren für Formteile basierend auf Pulver auf Basis von thermoplastischen Elastomeren, wobei das Pulver durch elektromagnetische Strahlung erhitzt und dadurch zu dem Formteil verschweißt wird. Die Erfindung betrifft weiterhin durch dieses Verfahren hergestellte Formteile und thermoplastische Elastomerpulver und deren Verwendung, die für die Herstellung dieser Formteile geeignet sind.

### Stand der Technik

Pulver auf der Basis von Elastomeren werden nach dem Stand der Technik nach dem Powder Slush-Verfahren, wie es beispielsweise in DE3916874, DE4006648 sowie in DE4107454 beschrieben wird, oder dem Rotationssinter-Verfahren, wie es beispielsweise in der DE 102007019862 A1 offenbart wird, durch das Aufbringen auf eine heiße Metallformen zu Formkörpern verarbeitet.

Hierzu werden die Formen in einem ersten Schritt erhitzt, z.B. in einem Ofen, durch InfrarotStrahlung oder mit Hilfe von Gasbrennern. Dabei muss die Temperatur der Formen so heiß sein, dass das im folgenden Schritt zugegebene thermoplastische Elastomerpulver an der heißen Wandung zumindest teilweise schmilzt, so dass es zusammensintern kann und einen stabilen Formkörper ergibt.

Die Metallform muss in einem weiteren Schritt wieder so stark abgekühlt werden, dass das Elastomer erstarrt und der Formkörper entnommen werden kann.

Um ein weiteres Formteil herzustellen muss die Form wieder über den Schmelzpunkt des thermoplastischen Elastomerpulvers aufgeheizt werden.

Durch die Aufwärm- und Abkühlzeiten ist dieses Verfahren sehr langwierig.

Da der Energiebedarf durch das wiederkehrende Aufheizen und Abkühlen der üblicherweise massiven Metallformen sehr hoch ist, wird zur Energieeinsparung schon lange nach alternativen Herstellungsverfahren gesucht. Beispielsweise beschreibt die DE 40 06 648 A1 die Herstellung von zelligen Polyurethanen nicht nur durch Erhitzen der Formen in Öfen sondern auch durch oberflächliche Wärmestrahlung. In Prociak etal., Polymery 2012, 57, Nr. 11-12, 786-790 wird ein Granulat mit Ruß mittels Mikrowelle erhitzt.

Kompakte thermoplastische Elastomere werden üblicherweise über Extrusion oder Spritzguss hergestellt. Beide Verfahren nutzen als Ausgangsmaterial thermoplastisches Granulat zur Fertigung von Bauteilen. Beim Spritzguss werden aufwendig zu konstruierende, unflexible und kostenintensive Formwerkzeuge benötigt. Bei der Extrusion können im Gegensatz zum Spritzguss problemlos in Masse dünne Folien hergestellt werden, jedoch kann im Gegensatz zum Powder-Slush Verfahren die Folienstärke nicht flexibel gestaltet geändert werden und es können nur 2 dimensional strukturierte Bauteile hergestellt werden.

Die Aufgabe der vorliegenden Erfindung bestand somit darin die Nachteile der beschrieben Verfahren zu überwinden und ein besseres Verfahren bereitzustellen.

### Beschreibung

Überraschenderweise gelingt dies indem Formteile aus kompaktem Elastomer aus einem Pulver auf der Basis von thermoplastischen Elastomeren wobei das thermoplastische Elastomer ausgewählt ist aus der Gruppe thermoplastisches Polyurethan (TPU), thermoplastisches Polyesterelastomer und thermoplastisches Copolyamid,, bevorzugt thermoplastischem Polyurethan, hergestellt werden, wobei man das Pulver auf eine Form oder in eine Form gibt und mittels elektromagnetischer Strahlung soweit erhitzt, dass das Pulver zumindest teilweise schmilzt und so zu dem Formteil verschmilzt, wobei die Frequenz der elektromagnetischen Strahlung zwischen 0,01 GHz und 300 GHz liegt, bevorzugt zwischen 0,01 GHz und 100 GHz, besonders bevorzugt 0,1 GHz und 50 GHz.

Im bevorzugten Ausführungsformen werden die elektromagnetischen Wellen mittels Laufzeitröhren, wie Klystrons, Wanderfeldröhren oder Magnetrons, Gunndioden für Festfrequenzen verwendet. In anderen bevorzugten Ausführungsformen werden Backwardwave Oszillatoren für große Frequenzbereiche verwendet, oder Masern für die gerichtete Bestrahlung und Erwärmung von einzelnen Bereichen und/oder Schichten der Formteile.

Durch die Tiefenwirkung der elektromagnetischen Strahlung in diesem Frequenzbereich, wie sie beim Sintern auf heißen Formen nicht möglich ist, ist eine schnelle, gezielte und genau dosierbare Erwärmung des Elastomerpulvers möglich und damit ein schnelles kontrolliertes Zusammensintern ohne dass die Wärme langsam von außen nach innen dringen muss. Somit ist es auch möglich, schichtweise auf nicht wärmeleitfähige, mikrowellenbeständigen festen Unterlagen oder flexiblen Geweben eine Schicht aus thermoplastischem Elastomerpulver aufzusintern.

Ein weiterer Vorteil des Verfahrens gegenüber dem üblichen Verfahren ist, dass die Formen nicht mehr wärmeleitfähig sein müssen und auch keine hohe Wärmkapazität zur Speicherung der Schmelzenergie benötigen. Es kann somit auf Metallformen verzichtet werden.

Stattdessen werden vorzugsweise hochtemperaturbeständige Polymerwerkstoff, Keramiken oder Glas, die keine Mikrowellenabsorption besitzen, verwendet. Diese Werkstoffe sind beispielsweise als Materialien für Mikrowellengeschirr bekannt.

Durch die Verwendung von Kunststoffformen kann das beschriebene Verfahren eine sehr günstige Alternative zur Herstellung kleiner Stückzahlen darstellen, da die Herstellungskosten der Formen deutlich gering im Vergleich zu Metallformen sind.

Durch Einfärbung des Elastomerpulvers werden zudem vielfältigste Designs möglich.
Ein weiterer Vorteil dieses Verfahrens ist der, dass auf einer ersten Elastomerschicht ein oder mehrere weitere Schichten aufgebracht werden können Übersintern auf eine erste Polyurethanschicht ist zudem durchführbar.
Die erfindungsgemäße Verschmelzung von thermoplastischen Elastomerpulvern durch elektromagnetische Bestrahlung mit besagten Frequenzen, insbesondere solche Elastomerpulver aus thermoplastischem Polyurethan, stellt eine vollkommen neue Möglichkeit der Herstellung auch von kompakten Elastomeren da.

In einer bevorzugten Ausführungsform basiert das Pulver auf einem Elastomer, das durch seine chemische Struktur elektromagnetische Strahlung absorbiert.

Erfindungsgemäße thermoplastische Elastomerpulver sind solche auf der Basis von thermoplastischem Polyurethan (TPU), thermoplastischem Polyesterelastomer, bevorzugt Polyetherester und/oder Polyesterester, oder thermoplastische Copolyamide, bevorzugt thermoplastisches Styrol oder Butadien-Blockcopolymere.

Andere erfindungsgemäße thermoplastische Elastomere sind solche auf der Basis von thermoplastischem Polyurethan (TPU), thermoplastischem Polyesterelastomer, bevorzugt ausgewählt aus der Gruppe Polyetherester und Polyesterester, sowie thermoplastische Copolyamide, bevorzugt ausgewählt aus der Gruppe Polyetheramid und Polyesteramid.

Wiederrum andere bevorzugte Elastomere sind Polyamid 12, Polyamid 6/12 und Polyamid 12/12.

Besonders bevorzugt werden Elastomere auf Basis von thermoplastischem Polyurethan (TPU).

In einer bevorzugten Ausführungsform wird thermoplastisches Elastomer, bevorzugt thermoplastisches Polyurethanen, ohne Beschichtung oder den Zusatz von elektromagnetischer Strahlung absorbierendem Additiv verwendet.

Die thermoplastischen Elastomere weisen bevorzugt eine Shore-Härte im Bereich von 30 A bis 78 D auf.

Da die Absorption beispielsweise im Falle des Pulversinterns sehr schnell erfolgen muss, sind häufig zusätzliche Absorber erforderlich, die auch im Falle des TPU die Mikrowellenabsorption verbessern und auch bei diesem Material die benötigte Verarbeitungszeit reduzieren

### TPU-Chemie

Thermoplastische Polyurethane sind hinlänglich bekannt. Die Herstellung erfolgt durch Umsetzung von (a) Isocyanaten mit (b) gegenüber Isocyanaten reaktiven Verbindungen / Polyol mit einem zahlenmittleren Molekulargewicht von 0,5 x 10³ g /mol bis 100 x 10³g /mol und gegebenenfalls (c) Kettenverlängerungsmitteln mit einem Molekulargewicht von 0,05 x 10³ g /mol bis 0,499 x 10³ g /mol gegebenenfalls in Gegenwart von (d) Katalysatoren und/oder (e) üblichen Hilfsstoffen und/oder Zusatzstoffen.

Die Komponenten (a) Isocyanat, (b) gegenüber Isocyanaten reaktive Verbindungen / Polyol, (c) Kettenverlängerungsmittel werden einzeln oder zusammen auch als Aufbaukomponenten angesprochen. Die Aufbaukomponenten einschließlich des Katalysators und/oder der üblichen Hilfsstoffe und/oder Zusatzstoffe werden auch Einsatzstoffe genannt.

Zur Einstellung von Härte und Schmelzindex der TPU können die eingesetzten Mengen der Aufbaukomponenten (b) und (c) in ihren molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung von weicheren thermoplastischen Polyurethanen, z.B. solchen mit einer Shore A Härte von kleiner als 95, vorzugsweise von 95 bis 75 Shore A, können bevorzugt die im wesentlichen difunktionellen Polyole (b) auch als Polyhydroxylverbindungen (b) bezeichnet und die Kettenverlängerungsmittel (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 Shore D bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der TPU werden die Aufbaukomponenten (a), (b), in einer bevorzugten Ausführungsform auch (c), bevorzugt in Gegenwart eines Katalysators (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Vorzugsweise werden TPU hergestellt, bei denen das TPU ein gewichtsmittlere Molekulargewicht von mindestens 0,1x10⁶ g/mol, bevorzugt von mindestens 0,4 x10⁶ g/mol und insbesondere größer als 0,6 x10⁶ g/mol aufweist. Die Obergrenze für das gewichtsmittlere Molekulargewicht der TPU wird in aller Regel durch die Verarbeitbarkeit wie auch das gewünschte Eigenschaftsspektrum bestimmt. Bevorzugt liegt das zahlenmittlere Molekulargewicht der TPU nicht über 0,8 x10⁶ g/mol. Bei den vorstehend für das TPU wie auch für die Aufbaukomponenten (a) und (b) angegebenen mittleren Molekulargewichten handelt es sich um die mittels Gelpermeationschromatographie bestimmten Gewichtsmittel.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-lsocyanato-3,3,5-trimethyl-5-isocyanatomethyl-cyclohexan (Isophoron-diisocyanat, IPDI), 1,4-Bis(isocyanatomethyl)cyclohexan und/oder 1,3-Bis(isocyanatomethyl)cyclohexan (HXDI), 2,4-Paraphenylendiisocynat (PPDI), 2,4-Tetramethylenxylendiisocyant (TMXDI), 4,4'-, 2,4'- und 2,2'-Dicyclohexylmethan-diisocyanat (H12 MDI) 1,6-Hexamethylen-diisocyanat (HDI)1,4-Cyclohexan-diisocyanat, 1-Methyl-2,4- und/oder -2,6-cyclohexan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat.

Bevorzugt werden die Isocyanate 2,2'-, 2,4'- und/oder 4,4'-Diphenylmethandiisocyanat (MDI), 1,6-Hexamethylen-diisocyanat (HDI) und 4,4'-, 2,4'- und 2,2'-Dicyclohexylmethan-diisocyanat (H12 MDI) verwendet, besonders bevorzugt ist 4,4"-Diphenylmethandiisocyanat (4,4'-MDI).

Als gegenüber Isocyanaten reaktive Verbindungen (b) sind bevorzugt solche mit einem Molekulargewicht zwischen 500 g/mol und 8 x10³ g/mol, bevorzugt 0,7 x 10³ g/Mol bis 6,0 x 10³ g/Mol, insbesondere 0,8 x 10³ g/Mol bis 4,0 x 10³ g/Mol.

Die gegenüber Isocyanat reaktive Verbindung (b) hat im statistischen Mittel mindestens 1,8 und höchstens 3,0 zerewitinoffaktiven Wasserstoffatomen, diese Anzahl wird auch als Funktionalität der gegenüber Isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Die gegenüber Isocyanat reaktive Verbindung ist im Wesentlichen linear und ist eine gegenüber Isocyanat reaktive Substanz oder eine Mischung verschiedener Substanzen, wobei dann die Mischung die genannte Anforderung erfüllt.

Diese langkettigen Verbindungen werden mit einem Stoffmengenanteil von 1 Äquivalent-Mol% bis 80 Äquivalent-Mol%, bezogen auf den Isocyanatgruppengehalt des Polyisocyanats eingesetzt.

Bevorzugt besitzen die gegenüber Isocyanat reaktive Verbindung (b) eine reaktive Gruppe ausgewählt aus der Hydroxylgruppe, der Aminogruppe, der Mercaptogruppe oder der Carbonsäuregruppe. Bevorzugt handelt es sich um die Hydroxylgruppe. Besonders bevorzugt ist die gegenüber Isocyanat reaktive Verbindung (b) ausgewählt aus der Gruppe der Polyesterole, der Polyetherole oder der Polycarbonatdiole, die auch unter dem Begriff "Polyole" zusammengefasst werden.

Weiter bevorzugt sind Polyesterdiole, bevorzugt Polycaprolacton, und/oder Polyetherpolyole, bevorzugt Polyetherdiole, weiter bevorzugt solche auf der Basis von Ethylenoxid, Propylenoxid und/oder Butylenoxid, bevorzugt Polypropylenglykol. Ein besonder bevorzugter Polyether ist Polytetrahydrofuran (PTHF), insbesondere Polyetherole.

Besonders bevorzugt werden als Polyole solche aus der folgenden Gruppe gewählt: Copolyester basierend auf Adipinsäure, Bernsteinsäure, Pentandisäure, Sebazinsäure oder deren Mischungen und Gemischen aus 1,2-Ethandiol und 1,4-Butandiol, Copolyester basierend auf Adipinsäure, Bernsteinsäure, Pentandisäure, Sebazinsäure oder deren Mischungen und Gemischen aus 1,4-Butandiol und 1,6-Hexandiol, Polyester basierend auf Adipinsäure, Bernsteinsäure, Pentandisäure, Sebazinsäure oder deren Mischungen und 3-Methyl-Pentandiol-1.5 und/oder Polytetramethylenglykol (Polytetrahydrofuran, PTHF).

Besonders bevorzugt ist die Verwendung des Copolyesters basierend auf Adipinsäure und Gemischen aus 1,2-Ethandiol und 1,4-Butandiol oder des Copolyesters basierend auf Adipinsäure und 1,4-Butandiol und 1,6-Hexandiol oder des Polyesters basieren auf Adipinsäure und Polytetramethylenglykol (Polytetrahydrofuran PTHF) oder deren Mischung.

Ganz besonders bevorzugt wird als Polyol Polyesters basierend auf Adipinsäure und Polytetramethylenglykol (PTHF) oder deren Mischungen verwendet.

In bevorzugten Ausführungsformen werden Kettenverlängerungsmittel (c) eingesetzt, dies sind bevorzugt aliphatische, araliphatische, aromatische und/oder cycloaliphatische Verbindungen mit einem Molekulargewicht von 0,05 x 10³ g/mol bis 0,499 x 10³ g/mol, bevorzugt mit 2 mit Isocyanat reaktiven Gruppen, die auch als funktionelle Gruppen bezeichnet werden.

Bevorzugt ist der Kettenverlängerer (c) mindestens ein Kettenverlängerer ausgewählt aus der Gruppe bestehend aus 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol. Besonders geeignet sind Kettenverlängerer ausgewählt aus der Gruppe bestehend aus 1,2-Ethylenglycol, 1,3-Propandiol, 1,4-Butandiol und 1,6-Hexandiol.

Ganz besonders bevorzugte Kettenverlängere sind 1,4-Butandiol, 1,6-Hexandiol und Ethandiol. In bevorzugten Ausführungsformen werden mit den Aufbaukomponenten Katalysatoren (d) eingesetzt. Dies sind insbesondere Katalysatoren, die die Reaktion zwischen den NCO-Gruppen der Isocyanate (a) und den Hydroxylgruppen der gegenüber Isocyanaten reaktiven Verbindung (b) und, sofern eingesetzt, dem Kettenverlängerungsmittel (c) beschleunigen. Bevorzugte Katalysatoren sind tertiäre Amine, insbesonder Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan. In einer anderen bevorzugten Ausführungsform sind die Katalysatoren organische Metallverbindungen wie Titansäureester, Eisenverbindungen, bevorzugt Eisen-(III)- acetylacetonat, Zinnverbindungen, bevorzugt solche von Carbonsäuren, besonders bevorzugt Zinndiacetat, Zinndioctoat, Zinndilaurat oder die Zinndialkylsalze, weiter bevorzugt Dibutylzinndiacetat, Dibutylzinndilaurat, oder Wismutsalze von Carbonsäuren, bevorzugt Wismutdecanoat.

Besonderes bevorzugte Katalysatoren sind Zinndioctoat, Wismutdecanoat. Titansäureester Der Katalysator (d) wird bevorzugt in Mengen von 0,0001 bis 0,1 Gew.-Teilen pro 100 Gew.-Teile der mit Isocyanaten reaktiven Verbindung (b) eingesetzt.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, bevorzugt gegen Hydrolyse, Licht, Hitze oder Verfärbung, anorganische und/oder organische Füllstoffe, Verstärkungsmittel und/oder Weichmacher.

Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, sterisch gehinderte Phenole, Hindered Amine Light Stabilizer, UV-Absorber, Hydrolyseschutzmittel, Quencher und Flammschutzmittel. Beispiele für kommerzielle Stabilisatoren sind gegeben in Plastics Additives Handbook, 5th Edition, H. Zweifel, ed., Hanser Publishers, München, 2001 ([1]), S.98-S136.

In einer bevorzugten Ausführungsform weisen die UV-Absorber ein zahlenmittleres Molekulargewicht von größer als 0,3 x 10³ g/mol, insbesondere größer als 0,39 x 10³ g/mol, auf. Ferner sollten die bevorzugt verwendeten UV-Absorber ein Molekulargewicht von nicht größer als 5 x 10³ g/mol, besonders bevorzugt von nicht größer als 2 x 10³ g/mol aufweisen.

Besonders geeignet als UV-Absorber ist die Gruppe der Benzotriazole. Beispiele für besonders geeignete Benzotriazole sind Tinuvin® 213, Tinuvin® 234, Tinuvin® 571, sowie Tinuvin® 384 und das Eversorb®82. Üblicherweise werden die UV-Absorber in Mengen von 0.01 Gew.-%, bis 5 Gew.-% bezogen auf die Gesamtmasse TPU zudosiert, bevorzugt 0,1 Gew.-%, bis 2,0 Gew. %, insbesondere 0,2 Gew.-% bis 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additives Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10 x 10³g/mol, besonders bevorzugt nicht größer als 5 x 10³ g/mol sein.

Besonders bevorzugte Hindered Amine Light Stabilizer sind bis-(1,2,2,6,6-pentamethylpiperidyl) sebacat (Tinuvin® 765, Ciba Spezialitätenchemie AG) und das Kondensationsprodukt aus 1-Hydroxyethyl-2,2,6,6-tetramethyl-4-hydroxypiperidin und Bernsteinsäure (Tinuvin® 622). Insbesondere bevorzugt ist das Kondensationsprodukt aus 1-Hydroxyethyl-2,2,6,6-tetramethyl-4-hydroxypiperidin und Bernsteinsäure (Tinuvin® 622), wenn der Titangehalt des fertigen Produktes kleiner als 150 ppm, bevorzugt kleiner als 50 ppm, insbesondere kleiner als 10 ppm bezogen auf die eingesetzten Aufbaukomponenten ist.

HALS Verbindungen werden bevorzugt in einer Konzentration von 0,01 Gew.-% bis 5 Gew.-% eingesetzt, besonders bevorzugt von 0,1 Gew.-% bis 1 Gew.-%, insbesondere von 0,15 Gew.-% bis 0,3 Gew.-% bezogen auf das Gesamtgewicht des thermoplastischen Polurethanes bezogen auf die eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z.B. aus Plastics Additives Handbook, 5th Edition, H. Zweifel, ed., Hanser Publishers, München, 2001.

Die Herstellung der TPU kann nach den bekannten Verfahren diskontinuierlich oder kontinuierlich, beispielsweise mit Reaktionsextrudern oder dem Bandverfahren nach dem "oneshot-" oder dem Prepolymer-Verfahren, bevorzugt nach dem "one-shot"-Verfahren erfolgen. Bei dem "one-shot-"Verfahren werden die zur Reaktion kommenden Komponenten (a), (b), in bevorzugten Ausführungsformen auch die Komponenten (c), (d) und/oder (e) nacheinander oder gleichzeitig miteinander vermischt, wobei die Polymerisationsreaktion unmittelbar einsetzt. Beim Extruderverfahren werden die Aufbaukomponenten (a), (b) sowie in bevorzugten Ausführungsformen auch (c), (d) und/oder (e) einzeln oder als Gemisch in den Extruder eingeführt und, bevorzugt bei Temperaturen von 100°C bis 280°C, vorzugsweise 140°C bis 250°C, zur Reaktion gebracht. Das erhaltene Polyurethan wird extrudiert, abgekühlt und granuliert.

Bevorzugt wird für die Herstellung des thermoplastischen Polyurethans ein Zweiwellenextruder verwendet, da der Zweiwellenextruder zwangsfördernd arbeitet und so eine präzisere Einstellung der Temperatur und Ausstoßmenge auf dem Extruder möglich ist.

Die verwendeten Elastomere liegen als Pulver vor. Dabei können alle üblichen Pulverisiertechnologien und Vermahlungstechniken, wie Mikrogranulierung, Vermahlung, kryogenes Vermahlen, Fällung, Schmelzedispergierung, eingesetzt werden um aus den Ausgangsmaterialien, die bevorzugt als Granulat vorliegen, Pulver zur erzeugen. In einer bevorzugten Ausführungsform wird Kryo-Vermahlung und Mikrogranulierung verwendet, besonders bevorzugt ist die Mikrogranulierung. Diese Pulver besitzen eine besonders glatte Oberfläche, zeigen daher ein besseres Fließverhalten und weniger Lufteinschlüsse im Formteil, was sich in verbesserten mechanischen Eigenschaften, insbesondere einer verbesserten Bruchdehnung und Zugfestigkeit der Prüfkörper äußert.

In bevorzugten Ausführungsformen haben die Pulver eine maximale räumliche Ausdehnung von 1 µm bis 3 mm, bevorzugt von 50 µm bis 2 mm, und besonders bevorzugt von 200 µm bis 1,0 mm.

In einer bevorzugten Ausführungsform hat das Pulver eine Schüttdichte im Bereich von 200 kg/m³ bis 900 kg/m³.

In einer weiteren bevorzugten Ausführungsform enthält das Pulver auf Basis von thermoplastischem Elastomer mindestens ein Additiv, das die elektromagnetische Strahlung absorbiert. Durch die Absorption der elektromagnetischen Strahlung werden primär die Additive, dadurch aber auch das Pulver aus dem thermoplastischen Elastomer, in dem sie sich befinden, bis zur Schmelze erhitzt.

In einer weiteren bevorzugten Ausführungsform ist der Anteil des mikrowellenabsorbierenden Additivs 0,01 Gew.-% bis 30 Gew.-%, bevorzugt 0,01 Gew.-% bis 10 Gew.-%, besonders bevorzugt 0,01 Gew.-% bis 5 Gew.-% bezogen auf das gesamte Pulver.

In einer bevorzugten Ausführungsform ist das Additiv, das elektromagnetische Strahlen absorbiert mit dem thermoplastischen Elastomer vermischt, in einer anderen bevorzugten Ausführungsform ist das Elastomer in dem Pulver zumindest teilweise von einer Beschichtung umgeben, die das Additiv enthält, das die elektromagnetische Strahlung absorbiert.

Beschrieben ist daher auch das Verfahren zur Herstellung von den Pulvern bei dem das thermoplastische Elastomer mit dem Additiv, das elektromagnetische Strahlen absorbiert vermischt wird oder, dass das Elastomer zumindest teilweise mit dem Additiv beschichtet wird, d.h. auf das Elastomerpulver wird eine Beschichtung aufgetragen.

Diese Additive werden bevorzugt als Reinstoff, Lösung, Pulver oder Dispersion mit üblichen Mischverfahren sowie Beschichtungsverfahren, wie Besprühen, Tauchen oder Benetzen, mit und ohne zusätzliche Hilfsstoffe auf das Polyurethanpulver aufgebracht. Hierzu werden bevorzugt Mischer, Sprühvorrichtungen, Tauchvorrichtungen bzw. Trommelapparaturen eingesetzt.

Besonders bevorzugt wird das Elastomerpulver mit einem die elektromagnetische Strahlung absorbierenden Weichmacher angereichert oder mit einer Emulsion einer die elektromagnetische Strahlung absorbierenden Substanz in einem Weichmacher beschichtet. Beispiele für Weichmacher sind: Phthalate, Alkylsulfonsäureester, Zitronensäureester, Adipinsäureester, 1,2-Cyclohexandicarbonsäurediisononylester und Glycerinester.

In dem beschriebenen Verfahren zur Herstellung des Pulvers werden zunächst die Partikeloberflächen dünn mit der stark Mikrowellen-absorbierenden Substanz, in z.B. einem Taumelmischer, beschichtet. Das so beschichtete Pulver wir in eine nicht die elektromagnetische Strahlung absorbierende Form gegeben und anschließend durch Bestrahlung mit der elektromagnetischen Strahlung verschweißt. Das Additiv ist vorzugsweise eine hochpolare, flüssige Verbindung wie Glycerintriacetat, Triethylen- oder Tripropylenglykol oder Zitronensäureester. Besonders bevorzugt sind Glycerintriacetat, Triethylen- oder Tripropylenglykol und Zitronensäureester.

Das Additiv absorbiert die elektromagnetische Strahlung und erwärmt so gezielt die Kontaktstellen des Pulvers, so dass diese verschweißen. Die Substanzen verteilen sich aufgrund ihrer Löslichkeit nach kurzer Zeit gleichmäßig im Polymer und werden in diesem stabil gehalten. Wird auf zusätzliche Absorber verzichtet, lassen sich ausreichend polare Polymere ebenfalls durch geeignete hochfrequente Strahlung (MW) verschweißen, allerdings ist die erforderlich Aufheizzeit länger und ggf. die erreichte Temperatur geringer.

Besonders bevorzugt werden die thermoplastischen Pulver mit einem 1,2,3-Propantrioltriacetat (Triacetin) angereichert.

Die Beschichtung basiert in einer bevorzugten Ausführungsform auf einer Substanz, die einen Siedepunkt oberhalb von 120°C besitzt und die in dem Elastomer lösliche ist.

In einer weiter bevorzugten Ausführungsform ist das Additiv, das die elektromagnetische Strahlung absorbiert, ausgewählt aus der Gruppe umfassend Glycerintriacetat, Triethylenglykol, Tripropylenglykol oder Zitronensäureester. Dabei liegt in einer Ausführungsform nur ein Additiv, das elektromagnetische Strahlung absorbiert vor, in einer anderen Ausführungsform sind mindestens zwei derartige Additive in dem Pulver enthalten.

In einer anderen bevorzugten Ausführungsform wird das Elastomerpulver vor der Bestrahlung mit einem farbigen Pigment, das üblicherweise eine maximale Korngröße von 5 µm bis 10 µm besitz oder einem flüssigen Farbstoff vermischt wird.

In einem weiteren bevorzugten Verfahren wird das farbige Pigment nicht homogen mit dem Elastomerpulver vermischt. Dadurch entstehen Schichten mit unterschiedlichen mechanischen Eigenschaften. Zusätzlich kann es zu unterschiedlicher Färbung kommen.

In einer anderen bevorzugten Ausführungsform wird das Pulver mit unterschiedlichen mindestens zwei Schichten in unterschiedlicher Färbung aufgetragen wird. Durch geeignete Wahl der Pigmente kann auch hier die Mechanik beeinflusst werden. Auch kann es durch entsprechenden Wahl von Pigmenten zur optischen Ausgestaltung des Formelementes kommen.

### Beispiele

### 1. Beispiel - Einsatzstoffe und Herstellung:

| | |
|---|---|
| TPU-Pulver: | thermoplastisches Polyurethan, erhalten aus granuliertem thermoplastischen Polyurethane der BASF Polyurethanes GmbH, Lemförde, Deutschland |
| Mikrowellenabsorber: | Triacetin (1,2,3-Propantrioltriacetat) |

| | |
|---|---|
| Rezeptur der thermoplastischen Polyurethane (TPU) | |

**Tabelle 1 - Ausgangssubstanzen zur Herstellung der thermoplastischen Polyurethane**

| Bezeichnung | Chemische Zusammensetzung | Quelle |
|---|---|---|
| lso1 | 1,6 Hexandiisocyanat | BASF |
| Iso2 | 4,4'-Methylendiphenylendiisocyanat | BASF |
| Polyol1 | Polytetrahydrofuran, Mn: 1000, OH-Zahl : 111,1 | BASF |
| Polyol2 | Polyesterdiol, Mn: 2200, OH-Zahl : 51 | BASF |
| KV1 | 1,4-Butandiol, Kettenverlängerer | BASF |
| KV2 | 1,6-Hexandiol, Kettenverlängerer | BASF |
| AO1 | Antioxidanz | BASF |
| AO2 | Antioxidanz | BASF |
| LS1 | Lichtschutzmittel | BASF |
| HS1 | Hydrolysestabilisator Carbodiimid | BASF |
| FL1 | Talkum Füllstoff | |
| GL1 | Wachs Verarbeitungshilfsmittel | |

**TPU 1 Rezeptur**

| Name | Menge | Einheit |
|---|---|---|
| Polyol1 | 6920 | KG |
| lso1 | 1861 | KG |
| KV2 | 920 | KG |
| AO1 | 45 | KG |
| HS1 | 69 | KG |
| AO2 | 50 | KG |
| GL1 | 20 | KG |
| LS1 | 100 | KG |
| FL1 | 15 | KG |

**TPU 2-Rezeptur**

| Name | Menge | Einheit |
|---|---|---|
| Polyol2 | 5601 | KG |
| Iso2 | 3528 | KG |
| KV1 | 766 | KG |
| AO2 | 100 | KG |
| GL1 | 5 | KG |

### Herstellung der Polymere im Handgussverfahren

Die Polyole wurden bei 80 °C in einem Behälter vorgelegt und mit den Komponenten gemäß der oben genannten Rezepturen bei einer Ansatzgröße von 2 kg unter starkem Rühren vermischt. Die Reaktionsmischung erhitzte sich auf über 110 °C und wurde dann auf einen auf ca. 110 °C aufgeheizten, teflonbeschichteten Tisch ausgegossen. Die erhaltene Gießschwarte wurde 15 Stunden bei 80 °C getempert, anschließend groß zerkleinert und zu Granulat extrudiert.

Die Extrusion erfolgte auf einem Doppelschneckenextruder der einen Strangdurchmesser von ca. 2 mm lieferte.

| | |
|---|---|
| Extruder: | gleichläufiger Doppelschneckenextruder, APV MP19 |
| Temperaturprofil: | HZ1 (Einzug) 175 °C bis 185 °C |
| | HZ2 180 °C bis 190 °C |
| | HZ3 185 °C bis 195 °C |
| | HZ4 185 °C bis 195 °C |
| | HZ5 (Düse) 180 °C bis 190 °C |
| Schneckendrehzahl: | 100 U/min |
| Druck: | ca. 10 bis 30 bar |
| Strangkühlung: | Wasserbad (10 °C) |

Mikrogranulate wurden auf einem Berstorff Zweischneckenextruder ZE 40, der mit einer Mikrolochplatte und einer Mikrounterwassergranulierung der Firma Gala ausgestattet war, hergestellt.

Die Pulvermahlung erfolgte auf einer Retsch Mühle ZM200, mit verschiedenen Siebeinsätzen von 0,35mm, 1 mm und 2mm, unter Trockeneis oder N2 Kühlung, sowie Aussiebung der in den Beispielen beschriebenen Fraktionen.

### 2. Beispiel - Geräte:

Labormikrowellensystem des Typs MLS-Ethos plus mit einer Höchstleistung von 2,5kW.

### 3. Beispiel - Messmethoden:

### 3.1 Partikelgröße: Bestimmung anhand von Mikroskopieaufnahmen

### 3.2 Schüttdichte:

Zur Bestimmung der Schüttdichte wurde ein 700 ml Gefäß mit dem Pulver gefüllt und das Gewicht mittels einer Waage bestimmt. Dabei beträgt die Genauigkeit ± 10 g/l.

### 3.3 Raumgewicht

Das Raumgewicht wurde nach der zum Zeitpunkt der Anmeldung gültigen DIN EN ISO 1183-1, A ermittelt.

### 3.4 Bruchdehnung und Zugfestigkeit

Die Bruchdehnung und Zugfestigkeit wurden nach der zum Zeitpunkt der Anmeldung gültigen DIN 53504-S2 bestimmt.

### 3.5 Shore A Härte

Die Shore A Härte wurde bestimmt nach der zum Zeitpunkt der Anmeldung gültigen DIN ISO 7619-1

### 3.6 Abrieb

Der Abrieb wurde nach der zum Zeitpunkt der Anmeldung gültigen DIN ISO 4649 bestimmt.

### 4. Beispiel - erfindungsgemäßes Beispiel B1:

Durch Unterwassergranulierung wurde das TPU 1 in einer Partikelgröße von weniger als 500 µm gefertigt (Mikrogranulatpulver). Die Schüttdichte dieses Mikrogranulatpulvers beträgt 660 g/L. Jeweils 15 g des Pulvers wurden gleichmäßig in Teflonformen der Größe 100 mm x 70 mm verteilt und in der Mikrowelle für 2 Minuten mit einer Leistung von 700 W bestrahlt. Um einen homogene Mikrowellenbestrahlung zu erzielen, wurden die Formen während der Bestrahlung auf einem Drehteller rotiert. Zusätzlich wurden die einzelnen Formen nach 1 min per Hand 180° um ihre horizontale Achse gedreht. Nach 2 Minuten ist das Pulver zu einer Platte zusammengesintert. Nach einer kurzen Abkühlphase in Raumluft von ca. 20 °C und 3 Minuten konnten die Platten aus den Formen entnommen werden. Parallel zu diesen Prüfplatten für die Zug- und Bruchfestigkeitsprüfung in der Größe 700 mm x 70 mm x 2 mm, wurden aus jeweils aus 6 g Pulver 35 mm x 35 mm x 6 mm große Platten für die Bestimmung des Raumgewichts, der Shore-Härte sowie des Abriebs hergestellt.

### 5. Beispiel - erfindungsgemäßes Beispiel B2:

Das TPU 1 Granulat wurde in einer Kryogenstiftmühle zu einer besonders kleinen Partikelgröße von weniger als 165µm gemahlen. Die Schüttdichte dieses Pulvers beträgt 470 g/L. Jeweils 15 g des Pulvers wurden gleichmäßig in Teflonformen der Größe 100 mm x 70 mm verteilt und in der Mikrowelle für 2 Minuten mit einer Leistung von 700 W bestrahlt. Um einen homogene Mikrowellenbestrahlung zu erzielen, wurden die Formen während der Bestrahlung auf einem Drehteller rotiert, zusätzlich wurden die einzelnen Formen nach 1 min per Hand 180° um ihre horizontale Achse gedreht. Nach 2 Minuten war das Pulver zu einer Platte zusammengesintert. Nach einer kurzen Abkühlphase in Raumluft bei ca. 20 °C von 3 Minuten konnten die Platten aus den Formen entnommen werden. Parallel zu diesen Prüfplatten für die Zug- und Bruchfestigkeitsprüfung in der Größe 700mm x 70mm x 2mm, wurden aus jeweils aus 6 g Pulver 35 mm x 35 mm x 6 mm große Platten für die Bestimmung des Raumgewichts, der Shore-Härte sowie des Abriebs hergestellt.

### 6. Beispiel - erfindungsgemäßes Beispiel B3:

Durch Unterwassergranulierung wurde das TPU 2 in einer Partikelgröße von weniger als 500µm gefertigt. Die Schüttdichte dieses Pulvers betrug 700 g/l. Jeweils 15 g des Pulvers wurden gleichmäßig in Teflonformen der Größe 100 mm x 70 mm verteilt und in der Mikrowelle für 2 Minuten mit einer Leistung von 700 W bestrahlt. Um einen homogene Mikrowellenbestrahlung zu erzielen, wurden die Formen während der Bestrahlung auf einem Drehteller rotiert, zusätzlich wurden die einzelnen Formen nach 1 min per Hand 180° um ihre horizontale Achse gedreht. Nach 2 Minuten war das Pulver zu einer Platte zusammengesintert. Nach einer kurzen Abkühlphase in Raumluft bei ca. 20 °C von 3 Minuten konnten die Platten aus den Formen entnommen werden. Parallel zu diesen Prüfplatten für die Zug- und Bruchfestigkeitsprüfung in der Größe 700 mm x 70 mm x 2 mm, wurden aus jeweils aus 6 g Pulver 35mm x 35mm x 6mm große Platten für die Bestimmung des Raumgewichts, der Shore-Härte sowie des Abriebs hergestellt.

### 7. Beispiel - erfindungsgemäß bevorzugtes Beispiel B4:

Durch Unterwassergranulierung konnte das TPU 1 in einer kleinen Partikelgröße weniger als 500µm gefertigt werden. Die Schüttdichte dieses Pulvers betrug 660 g/L. Dieses Pulver wurde mit 3 Gew.-% Triacetin angereichert. Der Zusatz erfolgte durch Zugabe von 3 g Triacetin auf 97 g Pulver, welches in einem geschlossen Gebinde für 4 Stunden lang auf einem elektrischen Rollband vollständig eingemischt wurde. Jeweils 15 g dieses Pulvers wurden gleichmäßig in Teflonformen der Größe 100 mm x 70 mm verteilt und in der Mikrowelle mit eine Leistung von 700 W bestrahlt. Um einen homogene Mikrowellenbestrahlung zu erzielen, wurden die Formen während der Bestrahlung auf einem Drehteller rotiert, zusätzlich wurden die einzelnen Formen nach 1 min per Hand 180° um ihre horizontale Achse gedreht. Bereits nach 90 Sekunden war das triacetinhaltige Pulver zu einer Platte zusammengesintert.

Nach einer kurzen Abkühlphase in Raumluft von 3 Minuten können die Platten aus den Formen entnommen werden. Parallel zu diesen Prüfplatten für die Zug- und Bruchfestigkeitsprüfung in der Größe 700mm x 70mm x 2mm, wurden aus jeweils aus 6g Pulver 35mm x 35mm x 6mm große Platten für die Bestimmung des Raumgewichts, der Shore-Härte sowie des Abriebs hergestellt.

### 8. Beispiel - Vergleichsversuch V1:

Die Vergleichsmuster V1 wurde nach dem allgemein bekannten Spritzgussverfahren gefertigt. Als Basismaterial wurde TPU 1 eingesetzt. Die Prüfung wurde an 2 mm und an 6 mm dicken Spritzgussplatten durchgeführt. Die Prüfplatten wurden zur Verbesserung der mechanischen Eigenschaften 20 Stunden bei 80°C getempert.

Im Spritzguss hergestellte Platten erreichen optimale mechanische Eigenschaften und dienen als Referenz der mechanischen Eigenschaften im erfinderischen Verfahren:

### 9. Beispiel - Vergleichsversuch V2:

Die Vergleichsmuster V2 wurde im Powder-slush-Verfahren hergestellt. Als Basismaterial wurde TPU 1 eingesetzt, welches pulverförmig in der Partikelgröße von weniger als 500µm vorlag.

Das Pulver wurde auf eine 230°C heiße Metallform gegeben, die vorher 45 Minuten im Umluftofen aufgeheizt wurde, und anschließen in einem 240°C heißen Heizschrank bis zum vollständigen Aufschmelzen des Pulvers gelagert. Zum Aufschmelzen von 100 g Pulver mit 3 mm Anfangshöhe wurden 2 Minuten benötigt. Das Aufschmelzen von 70 g Pulver in einer anfänglichen Höhe von 10 mm benötigte 4 Minuten.

Anschließend wurden die Metallformen in einem Wasserbad auf Raumtemperatur innerhalb von 5 Minuten abgekühlt. Während des Abkühlens erstarrte die Schmelze und konnte im kalten Zustand entnommen werden. Es wurden prüfbare Platten in der Dicke von 2mm und 6mm hergestellt.

Die nach dem üblichen Powder-Slush Verfahren hergestellten Proben benötigen etwa eine Stunde zur Herstellung eines Formteiles, im Gegensatz dazu sind nach den hier beschriebenen Sinterverfahren Formteile schon nach wenigen Minuten erhältlich.

### 10. Beispiel - Ergebnisse

Die Eigenschaften der Elastomerplatten aus den Beispielen B1 bis B4 und den Vergleichsversuchen V1 - V2 sind in Tabelle 1 zusammengestellt.

Die in den erfindungsgemäßen Beispielen B1 bis B4 beschriebenen Materialien erreichten in allen Eigenschaften das hohe Niveau vom Vergleichsbeispiel 1, dem Standard-TPU, welches auf einer Spritzgussmaschine im üblichen Verfahren hergestellt wurde und zur weiteren Verbesserung der mechanischen Eigenschaften in einem Umluftofen bei 80°C 20 Std. getempert wurde. Mit Vergleichsbeispiel 2, dem Powder-slush-Verfahren, sind die mittels Mikrowellenstrahlung gesinterten Materialien ebenfalls gleichwertig, wobei die Herstellzeiten nur einen Bruchteil des bekannten Powder Slush Verfahrens betragen.

Der Einsatz von Triacetin im Beispiel B4 ermöglicht in der Verarbeitung eine Zeiteinsparung, gegenüber B1, die Werte in der Zugfestigkeit, Reißdehnung und Abrieb sind weiterhin vergleichbar.

**Tabelle 1: Eigenschaften der Elastomerplatten**

| | B1 | B2 | B3 | B4 | V1 | V2 |
|---|---|---|---|---|---|---|
| Raumgewicht [g/l] | 1,13 | 1,12 | 1,11 | 1,13 | 1,14 | 1,13 |
| Shorehärte | 93 | 93 | 88 | 92 | 90 | 93 |
| Zugfestigkeit [MPa] | 13 | 10 | 12 | 12 | 15 | 13 |
| Bruchdehnung [MPa] | 700 | 510 | 730 | 630 | 640 | 730 |
| Abrieb | 116 | 198 | 170 | 132 | 118 | 117 |

### Mikrowellenverschweißung von Elastomer Pulver

### Zusammenfassung

Verfahren zur Herstellung von Formteilen aus kompaktem Elastomer aus einem Pulver auf der Basis von thermoplastischen Elastomeren, wobei das thermoplastische Elastomer ausgewählt ist aus der Gruppe thermoplastisches Polyurethan (TPU), thermoplastisches Polyesterelastomer und thermoplastisches Copolyamid, und man das Pulver auf eine Form oder in eine Form gibt und mittels elektromagnetischer Strahlung soweit erhitzt, dass das Pulver zumindest teilweise schmilzt und so zu dem Formteil verschmilzt, und die Frequenz der elektromagnetischen Strahlung zwischen 0,01 GHz und 300 GHz liegt

## Patentansprüche

1. Verfahren zur Herstellung von Formteilen aus kompaktem Elastomer aus einem Pulver auf der Basis von thermoplastischem Elastomer, wobei das thermoplastische Elastomer ausgewählt ist aus der Gruppe thermoplastisches Polyurethan (TPU), thermoplastisches Polyesterelastomer und thermoplastisches Copolyamid, und man das Pulver auf eine Form oder in eine Form gibt und mittels elektromagnetischer Strahlung soweit erhitzt, dass das Pulver zumindest teilweise schmilzt und so zu dem Formteil verschmilzt, und die Frequenz der elektromagnetischen Strahlung zwischen 0,01 GHz und 100 GHz liegt.

2. Verfahren nach vorherigem Anspruch, **dadurch gekennzeichnet, dass** das Pulver ein thermoplastisches Elastomer enthält, das durch seine chemischen Struktur elektromagnetische Strahlung absorbiert und/oder das Pulver mindestens ein Additiv enthält, das die elektromagnetische Strahlung absorbiert.

3. Verfahren nach einem der vorherigen Ansprüche, **dadurch gekennzeichnet, dass** das thermoplastische Polyesterelastomer ausgewählt ist aus der Gruppe Polyetherester und Polyesterester, und/oder das thermoplastische Copolyamid ausgewählt ist aus der Gruppe Polyetheramid und Polyesteramid.

4. Verfahren nach Anspruch 1, **dadurch gekennzeichnet, dass** das thermoplastische Elastomer thermoplastisches Polyurethan ist.

5. Verfahren gemäß einem der vorgehenden Ansprüche, **dadurch gekennzeichnet, dass** einzelne Bereiche der Formteile gezielt mit einem Maser oder einem gerichteten elektromagnetischen Strahl einer Frequenz zwischen 0,01 GHz und 100 GHz erwärmt werden.

6. Verfahren nach dem vorhergehenden Anspruch, **dadurch gekennzeichnet, dass** das Elastomerpulver vor der Bestrahlung mit einem Pigment oder einem flüssigen Farbstoff vermischt wird.

7. Verfahren nach dem vorgehenden Anspruch, **dadurch**
**gekennzeichnet, dass** das farbige Pigment nicht homogen mit dem Elastomerpulver vermischt wird und/oder das Pulver in mindestens zwei Schichten in unterschiedlicher Färbung aufgetragen wird.

8. Verfahren nach einem der vorhergehenden Ansprüche, wobei das Formteil ein Hohlkörper ist, der nach dem Rotationssinterverfahren hergestellt wird und die Form innerhalb eines elektromagnetische Strahlung abgebenden Gerätes rotiert oder elektromagnetische Strahlung mittels einer Antenne innerhalb einer rotierenden Form emittiert wird.

9. Verwendung eines Pulvers auf Basis von thermoplastischem Elastomer und mindestens einem Additiv zur Herstellung von Formteilen gemäß dem Verfahren nach einem der Ansprüche 1 bis 8, wobei das Pulver zumindest ein Additiv enthält, das die elektromagnetische Strahlung absorbiert und das Additiv ausgewählt ist aus der Gruppe umfassend Glycerintriacetat, Triethylenglykol, Tripropylenglykol oder Zitronensäureester.

10. Verwendung nach dem vorhergehenden Anspruch, **dadurch gekennzeichnet, dass** das Pulver durch Mikrogranulierung hergestellt wurde.

11. Verwendung nach einem der vorhergehenden Ansprüche 9 bis 10, **dadurch gekennzeichnet, dass** die maximale räumliche Ausdehnung des Pulvers 200 µm bis 1,0 mm beträgt.

12. Verwendung nach einem der vorhergehenden Ansprüche 9 bis 11, **dadurch gekennzeichnet, dass** der Anteil der mikrowellenabsorbierenden Substanzen 0,01 Gew.-% bis 30 Gew.-%, bevorzugt 0,01 Gew.-% bis 10 Gew.-%, besonders bevorzugt 0,01 Gew.-% bis 5 Gew.-% bezogen auf das gesamte Pulver beträgt.

13. Verwendung nach einem der vorhergehenden Ansprüche 9 bis 12, **dadurch gekennzeichnet, dass** das
Elastomer zumindest teilweise von einer Beschichtung umgeben ist, die das Additiv enthält, das die elektromagnetische Strahlung absorbiert.

14. Verwendung nach Anspruch 13, **dadurch gekennzeichnet, dass** die Beschichtung auf einer Substanz basiert, die einen Siedepunkt oberhalb von 120°C besitzt und die in dem Elastomer löslich ist.

15. Verwendung nach einem der vorhergehenden Ansprüche 9 bis 14, **dadurch gekennzeichnet, dass** der
Gewichtsanteil der Beschichtung 1 Gew.-% bis 5 Gew.-%, bezogen auf das Gesamtgewicht des Pulvers beträgt.

16. Verwendung nach einem der vorhergehenden Ansprüche 9 bis 15, **dadurch gekennzeichnet, dass** das Pulver eine Schüttdichte im Bereich von 200 kg/m³ bis 900 kg/m³ aufweist.

17. Verwendung nach einem der vorhergehenden Ansprüche 9 bis 16; **dadurch gekennzeichnet, dass** das thermoplastische Elastomer ausgewählt ist aus der Gruppe thermoplastisches Polyurethan (TPU), thermoplastisches Polyesterelastomer, sowie thermoplastisches Copolyamid, wobei das thermoplastische Polyesterelastomer bevorzugt ausgewählt ist aus der Gruppe Polyetherester und Polyesterester, und/oder das thermoplastische Copolyamid bevorzugt ausgewählt ist aus der Gruppe Polyetheramid und Polyesteramid, und es sich bei dem thermoplastischen Elastomer ganz besonders bevorzugt um thermoplastisches Polyurethan handelt.

## Claims

1. A process for producing moldings consisting of compact elastomer from a powder based on thermoplastic elastomer, wherein the thermoplastic elastomer is selected from the group of thermoplastic polyurethane (TPU), thermoplastic polyester elastomer and thermoplastic copolyamide, and the powder is placed on a mold or in a mold and by means of electromagnetic radiation is heated to an extent such that the powder undergoes at least partial melting and thus fuses to afford the molding and the frequency of the electromagnetic radiation is between 0.01 GHz and 100 GHz.

2. The process according to the preceding claim, wherein the powder comprises a thermoplastic elastomer that absorbs electromagnetic radiation as a result of its chemical structure and/or the powder comprises at least one additive that absorbs the electromagnetic radiation.

3. The process according to either of the preceding claims, wherein the thermoplastic polyester elastomer is selected from the group of polyetherester and polyesterester, and/or the thermoplastic copolyamide is selected from the group of polyetheramide and polyesteramide.

4. The process according to claim 1, wherein the thermoplastic elastomer is thermoplastic polyurethane.

5. The process according to any of the preceding claims, wherein individual regions of the moldings are specifically heated with a maser or a targeted electromagnetic beam having a frequency between 0.01 GHz and 100 GHz.

6. The process according to the preceding claim, wherein the elastomer powder is prior to irradiation mixed with a pigment or a liquid dye.

7. The process according to the preceding claim, wherein
the colored pigment is inhomogeneously mixed with the elastomer powder and/or the powder is applied in at least two layers with different coloring.

8. The process according to any of the preceding claims, wherein the molding is a hollow body produced by the rotational sintering process and the mold rotates inside an electromagnetic radiation-emitting device or electromagnetic radiation is emitted inside a rotating mold by means of an antenna.

9. The use of a powder based on thermoplastic elastomer and at least one additive for producing moldings by the process according to any of claims 1 to 8, wherein the powder comprises at least one additive that absorbs the electromagnetic radiation and the additive is selected from the group comprising glycerol triacetate, triethylene glycol, tripropylene glycol or citric acid ester.

10. The use according to the preceding claim, wherein the powder has been produced by micropelletization.

11. The use according to either of the preceding claims 9 and 10, wherein the maximum spatial extent of the powder is 200 µm to 1.0 mm.

12. The use according to any of the preceding claims 9 to 11, wherein the proportion of the microwave-absorbing substances is 0.01% by weight to 30% by weight, preferably 0.01% by weight to 10% by weight, particularly preferably 0.01% by weight to 5% by weight, based on the total powder.

13. The use according to any of the preceding claims 9 to 12, wherein the elastomer is at least partially surrounded by a coating comprising the additive that absorbs the electromagnetic radiation.

14. The use according to claim 13, wherein the coating is based on a substance which has a boiling point above 120°C and which is soluble in the elastomer.

15. The use according to any of the preceding claims 9 to 14, wherein the weight fraction of the coating is 1% by weight to 5% by weight based on the total weight of the powder.

16. The use according to any of the preceding claims 9 to 15, wherein the powder has a poured density in the range from 200 kg/m³ to 900 kg/m³.

17. The use according to any of the preceding claims 9 to 16; wherein the theremoplastic elastomer is selected from the group of thermoplastic polyurethane (TPU), thermoplastic polyester elastomer and thermoplastic copolyamide, wherein the thermoplastic polyester elastomer is preferably selected from the group of polyetherester and polyesterester, and/or the thermoplastic copolyamide is preferably selected from the group of polyetheramide and polyesteramide, and the thermoplastic elastomer is very particularly preferably thermoplastic polyurethane.

## Revendications

1. Procédé pour la fabrication de pièces façonnées en élastomère compact, à partir d'une poudre à base d'élastomère thermoplastique, l'élastomère thermoplastique étant choisi dans le groupe constitué par le polyuréthane thermoplastique (TPU), un élastomère thermoplastique de polyester et un copolyamide thermoplastique et la poudre est introduite sur ou dans un moule et chauffée par un rayonnement électromagnétique jusqu'à ce que la poudre fonde au moins partiellement et se conforme ainsi en masse fondue à la pièce façonnée et la fréquence du rayonnement électromagnétique se situe entre 0,01 GHz et 100 GHz.

2. Procédé selon la revendication précédente, **caractérisé en ce que** la poudre contient un élastomère thermoplastique qui absorbe un rayonnement électromagnétique par sa structure chimique et/ou la poudre contient au moins un additif qui absorbe le rayonnement électromagnétique.

3. Procédé selon l'une quelconque des revendications précédentes, **caractérisé en ce que** l'élastomère thermoplastique de polyester est choisi dans le groupe constitué par le polyétherester et le polyesterester et/ou le copolyamide thermoplastique est choisi dans le groupe constitué par le polyétheramide et le polyesteramide.

4. Procédé selon la revendication 1, **caractérisé en ce que** l'élastomère thermoplastique est un polyuréthane thermoplastique.

5. Procédé selon l'une quelconque des revendications précédentes, **caractérisé en ce que** différentes zones des pièces façonnées sont réchauffées de manière ciblée à l'aide d'un Maser ou d'un rayon électromagnétique orienté d'une fréquence entre 0,01 GHz et 100 GHz.

6. Procédé selon la revendication précédente, **caractérisé en ce que** la poudre d'élastomère est mélangée avant l'irradiation avec un pigment ou un colorant liquide.

7. Procédé selon la revendication précédente, **caractérisé en ce que** le pigment coloré n'est pas mélangé de manière homogène avec la poudre d'élastomère et/ou la poudre est appliquée en au moins deux couches de couleurs différentes.

8. Procédé selon l'une quelconque des revendications précédentes, la pièce façonnée étant un corps creux qui est produit selon le procédé de frittage en rotation et le moule tourne dans un appareil émettant un rayonnement électromagnétique ou un rayonnement électromagnétique est émis au moyen d'une antenne à l'intérieur d'un moule rotatif.

9. Utilisation d'une poudre à base d'élastomère thermoplastique et d'au moins un additif pour la fabrication de pièces façonnées selon le procédé selon l'une quelconque des revendications 1 à 8, la poudre contenant au moins un additif qui absorbe le rayonnement électromagnétique et l'additif étant choisi dans le groupe comprenant le triacétate de glycérol, le triéthylèneglycol, le tripropylèneglycol ou les esters de l'acide citrique.

10. Utilisation selon la revendication précédente, **caractérisée en ce que** la poudre a été préparée par microgranulation.

11. Utilisation selon l'une quelconque des revendications précédentes 9 à 10, **caractérisée en ce que** la dilatation spatiale maximale de la poudre est de 200 µm à 1,0 mm.

12. Utilisation selon l'une quelconque des revendications précédentes 9 à 11, **caractérisée en ce que** la proportion de substances absorbant les micro-ondes est de 0,01% en poids à 30% en poids, de préférence de 0,01% en poids à 10% en poids, de manière particulièrement préférée de 0,01% en poids à 5% en poids, par rapport à la totalité de la poudre.

13. Utilisation selon l'une quelconque des revendications précédentes 9 à 12, **caractérisée en ce que** l'élastomère est entouré au moins partiellement par un revêtement qui contient l'additif qui absorbe le rayonnement électromagnétique.

14. Utilisation selon la revendication 13, **caractérisée en ce que** le revêtement est à base d'une substance qui présente un point d'ébullition supérieur à 120°C et qui est soluble dans l'élastomère.

15. Utilisation selon l'une quelconque des revendications précédentes 9 à 14, **caractérisée en ce que** la proportion pondérale du revêtement est de 1 à 5% en poids, par rapport au poids total de la poudre.

16. Utilisation selon l'une quelconque des revendications précédentes 9 à 15, **caractérisée en ce que** la poudre présente une densité apparente dans la plage de 200 kg/m³ à 900 kg/m³.

17. Utilisation selon l'une quelconque des revendications précédentes 9 à 16, **caractérisée en ce que** l'élastomère thermoplastique est choisi dans le groupe constitué par le polyuréthane thermoplastique (TPU), un élastomère thermoplastique de polyester ainsi qu'un copolyamide thermoplastique, l'élastomère thermoplastique de polyester étant de préférence choisi dans le groupe constitué le polyétherester et le polyesterester et/ou le copolyamide thermoplastique étant de préférence choisi dans le groupe constitué par le polyétheramide et le polyesteramide et il s'agit de manière tout particulièrement préférée pour l'élastomère thermoplastique de polyuréthane thermoplastique.
